# EUROPEAN PATENT APPLICATION

(11) **EP 4 752 036 A1**
(43) Date of publication of application: **03.06.2026**
(21) Application number: 25217865.2
(22) Date of filing: 24.11.2025
(51) Int. Cl.: B62D 5/09, B62D 1/22, B62D 6/00

(54) **ASPHALT FINISHER**

(30) Priority: 27.11.2024 JP 2024206092
(71) Applicant: Sumitomo Construction Machinery Co., Ltd., Tokyo 141-6025 (JP)
(72) Inventor: GOIO, Manabu, Chiba, 263-0001 (JP)
(74) Representative: Louis Pöhlau Lohrentz

(57) **Abstract**

An asphalt finisher is provided and includes a plurality of wheels including a steered wheel; a steering cylinder configured to adjust a steered angle of the steered wheel; a hydraulic pump configured to supply hydraulic oil to the steering cylinder; a proportional control valve disposed between the hydraulic pump and the steering cylinder, and configured to control a flow rate and a direction of the hydraulic oil supplied to the steering cylinder; and a controller configured to control the proportional control valve to control the steered angle.

## Description

### BACKGROUND

### 1. Technical Field

The present disclosure relates to an asphalt finisher.

### 2. Description of Related Art

A wheel-type work machine configured to control a steered angle of a steered wheel in accordance with operation of a steering wheel is known (see Japanese Unexamined Patent Publication No. 2009-113611). The work machine described in Japanese Unexamined Patent Publication No. 2009-113611 is configured to control a steered angle of a steered wheel by switching the direction of hydraulic oil supplied to a steering cylinder via a direction switching valve.

When a direction switching valve is used to control the steered angle of the steered wheel as in the work machine described in Japanese Unexamined Patent Publication No. 2009-113611, an improvement in accuracy of control of the steered angle is an issue to address.

The present disclosure provides an asphalt finisher capable of improving the accuracy of control of the steered angle.

### SUMMARY

In an embodiment of the present disclosure, an asphalt finisher includes: a plurality of wheels including a steered wheel; a steering cylinder configured to adjust a steered angle of the steered wheel; a hydraulic pump configured to supply hydraulic oil to the steering cylinder; a proportional control valve disposed between the hydraulic pump and the steering cylinder, and configured to control a flow rate and a direction of the hydraulic oil supplied to the steering cylinder; and a controller configured to control the proportional control valve to control the steered angle.

According to the embodiment of the present disclosure, it is possible to provide an asphalt finisher capable of improving the accuracy of control of the steered angle.

### BRIEF DESCRIPTION OF THE DRAWINGS

FIG. 1 is a side diagram of an asphalt finisher according to an embodiment of the present disclosure;
FIG. 2 is a top diagram of the asphalt finisher of FIG. 1;
FIG. 3 is a diagram illustrating a configuration example of an automatic steering system;
FIG. 4 is a circuit diagram illustrating a configuration of a steering device of the automatic steering system;
FIG. 5 is a hydraulic circuit diagram of the steering device;
FIG. 6 is a circuit diagram illustrating a modified example of the steering device of FIG. 4;
FIG. 7 is a top diagram of a construction site;
FIG. 8 is a top diagram of the construction site;
FIG. 9A is a top diagram of the construction site; and
FIG. 9B is a top diagram of the construction site.

### DETAILED DESCRIPTION

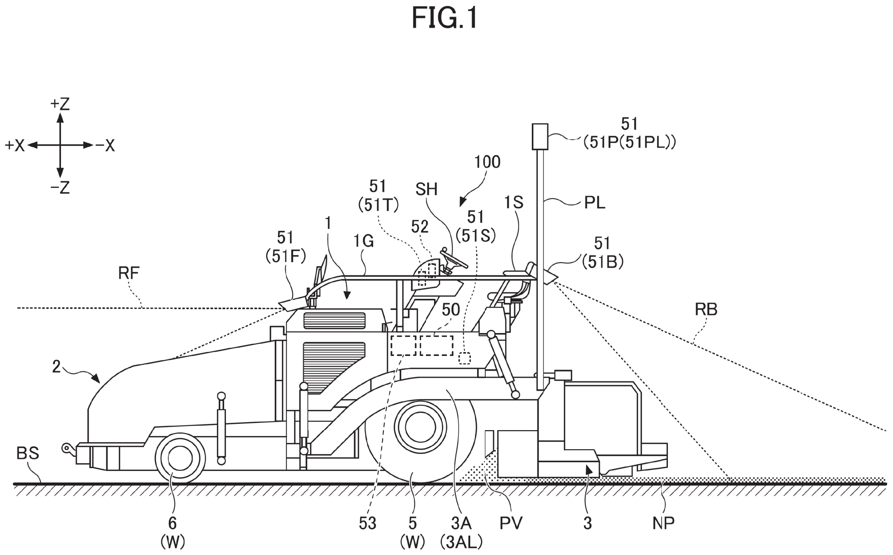

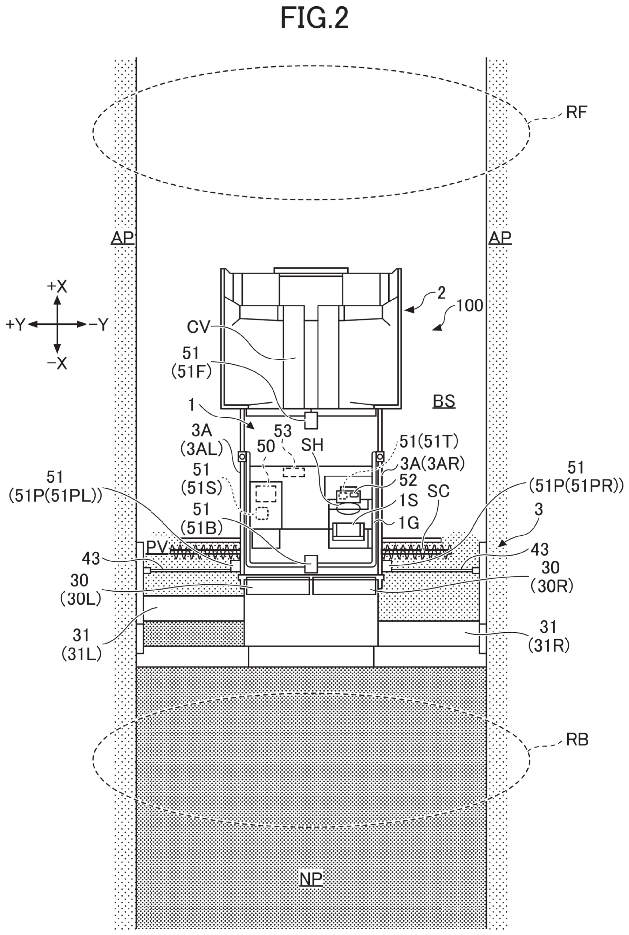

FIG. 1 is a side diagram of an asphalt finisher 100 according to an embodiment of the present disclosure. FIG. 2 is a top diagram of the asphalt finisher 100.

In the present embodiment, the asphalt finisher 100 is a wheel-type asphalt finisher, and includes a plurality of wheels W including rear wheels 5 and front wheels 6. The front wheels 6 are steered wheels for changing the moving direction of the asphalt finisher 100. The asphalt finisher 100 mainly includes a tractor 1, a hopper 2, and a screed 3. In the following, a direction (+X direction) in which the hopper 2 is viewed from the tractor 1 is defined as forward, and a direction (-X direction) in which the screed 3 is viewed from the tractor 1 is defined as rearward.

The tractor 1 is a mechanism configured to move the asphalt finisher 100. In the present embodiment, the tractor 1 moves the asphalt finisher 100 by rotating the rear wheels 5 using a rear-wheel moving hydraulic motor and rotating the front wheels 6 using a front-wheel moving hydraulic motor. The rear-wheel moving hydraulic motor and the front-wheel moving hydraulic motor are rotated by receiving a supply of hydraulic oil from a hydraulic pump. However, the front wheels 6 may be driven wheels.

The asphalt finisher 100 may be a crawler-type asphalt finisher. In this case, a combination of the rear wheels 5 and the front wheels 6 is replaced with a combination of a left crawler and a right crawler.

A controller 50 is a control device configured to control the asphalt finisher 100. In the present embodiment, the controller 50 is formed by a microcomputer including a CPU, a volatile storage device, a nonvolatile storage device, and the like, and is mounted in the tractor 1. Each function of the controller 50 is realized by the CPU executing a program stored in the nonvolatile storage device. However, each function of the controller 50 may be realized not only by software but also by hardware, or may be realized by a combination of hardware and software.

The hopper 2 is a mechanism configured to receive a paving material. In the present embodiment, the hopper 2 is disposed on the front side of the tractor 1, and configured by a hopper cylinder to be opened or closed in a vehicle-width direction (Y-axis direction). The asphalt finisher 100 typically receives the paving material (e.g., an asphalt mixture) from the loading bed of a dump truck with the hopper 2 fully opened. FIGS. 1 and 2 illustrate a state in which the hopper 2 is fully opened. When the paving material in the hopper 2 decreases, the hopper 2 is closed, and the paving material near the inner walls of the hopper 2 is collected toward a center portion of the hopper 2. This is because conveyors CV located at the center portion of the hopper 2 can convey the paving material to the rear side of the tractor 1. The paving material conveyed to the rear side of the tractor 1 is laid and spread in the vehicle-width direction by screws SC on the rear side of the tractor 1 and on the front side of the screed 3. In the present embodiment, the screws SC are in a state in which extension screws are connected to the left and right sides. FIGS. 1 and 2 omit illustration of a paving material PV in the hopper 2. Also, in FIGS. 1 and 2, the paving material PV laid and spread by the screws SC is illustrated by a rough dot pattern, and a new pavement body NP leveled by the screed 3 is illustrated by a fine dot pattern.

The screed 3 is a mechanism configured to level the paving material PV. In the present embodiment, the screed 3 includes front screeds 30 and rear screeds 31. The front screeds 30 include a left front screed 30L and a right front screed 30R. The rear screeds 31 are extendible/contractible in the vehicle-width direction, and include a left rear screed 31L and a right rear screed 31R. However, the rear screeds 31 may be fixed-width screeds connected to the left and right sides of the front screeds 30. Also, the screeds 3 are floating screeds pulled by the tractor 1, and are connected to the tractor 1 via leveling arms 3A. The leveling arms 3A include a left leveling arm 3AL disposed on the left side of the tractor 1 and a right leveling arm 3AR disposed on the right side of the tractor 1.

Mold boards 43 are attached to the front of the screeds 3. The mold boards 43 are configured to adjust the amount of the paving material PV staying in front of the screeds 3. The paving material PV reaches the underside of the screeds 3 through the gaps between the lower ends of the mold boards 43 and a subbase BS.

Information obtainment devices 51, an in-vehicle display device 52, and a steering device 53 are attached to the tractor 1.

Each of the information obtainment devices 51 is configured to obtain information of a road to be constructed (hereinafter may be referred to as a "construction target road"), and output the obtained information to the controller 50. The information of the construction target road includes, for example, the width of the road, a change in curvature in a section with an easement curve (a section with a clothoid curve), and the curvature in an arc section. In the present embodiment, the information obtainment devices 51 include, for example, a forward monitoring device 51F, a rearward monitoring device 51B, a moving speed sensor 51S, a positioning device 51P, and a communication device 51T.

The forward monitoring device 51F is configured to monitor a space in front of the asphalt finisher 100. In the present embodiment, the forward monitoring device 51F can be a LiDAR sensor configured to monitor a monitoring range RF in front of the tractor 1. The forward monitoring device 51F is attached to a center portion of the tractor 1. The center portion of the tractor 1 is, for example, the front-end center of a cover that covers an engine room on the rear side of the hopper 2. Alternatively, the forward monitoring device 51F may be attached to any other portion of the asphalt finisher 100. The forward monitoring device 51F may be configured by a plurality of LiDAR sensors. When the forward monitoring device 51F is configured by the plurality of LiDAR sensors, the forward monitoring device 51F can simultaneously monitor a plurality of monitoring ranges that do not overlap with each other. In this case, the plurality of LiDAR sensors may include a right front LiDAR sensor attached to the front-end right portion of the tractor 1 and a left front LiDAR sensor attached to the front-end left portion of the tractor 1. Also, the LiDAR sensor may be attached to the tractor 1 via a bracket, a pole, or the like.

The rearward monitoring device 51B is configured to monitor a space rearward of the asphalt finisher 100. In the present embodiment, the rearward monitoring device 51B can be a LiDAR sensor configured to monitor a monitoring range RB rearward from the screeds 3. The rearward monitoring device 51B is attached to a guide rail 1G configured to function as a handrail. Alternatively, the rearward monitoring device 51B may be attached to a lower portion of a driver's seat 1S, or may be attached to any other portion of the asphalt finisher 100. Also, the rearward monitoring device 51B may be configured by a plurality of LiDAR sensors. When the rearward monitoring device 51B is configured by the plurality of LiDAR sensors, the rearward monitoring device 51B can simultaneously monitor a plurality of monitoring ranges that do not overlap with each other. In this case, the plurality of LiDAR sensors may include a right rear LiDAR sensor attached to the rear-end right portion of the tractor 1 and a left rear LiDAR sensor attached to the rear-end left portion of the tractor 1. Also, the LiDAR sensor may be attached to the tractor 1 via a bracket, a pole, or the like.

The information obtainment device 51 may include lateral monitoring devices each configured to monitor a space lateral to the asphalt finisher 100. In this case, the lateral monitoring devices may include a left lateral monitoring device and a right lateral monitoring device. The left lateral monitoring device is, for example, a LiDAR sensor configured to monitor a monitoring range on the left side of the tractor 1, and may be attached to the left end of the upper surface of the tractor 1 in front of the rear wheels 5. The right lateral monitoring device is, for example, a LiDAR sensor configured to monitor a monitoring range on the right side of the tractor 1, and may be attached to the right end of the upper surface of the tractor 1 in front of the rear wheels 5.

The LiDAR sensor is, for example, configured to measure distances between many points within the monitoring range and the LiDAR sensor. However, at least one of the forward monitoring device 51F or the rearward monitoring device 51B may be a monocular camera, a stereo camera, a millimeter wave radar sensor, a laser radar sensor, a laser scanner, a depth camera, a laser range finder, or the like. The same applies to the lateral monitoring devices.

The monitoring range RF of the forward monitoring device 51F desirably includes the subbase BS and a feature AP located outside the subbase BS. This is for obtaining information of the width of the construction target road. The same applies to the monitoring ranges of the lateral monitoring devices. In the present embodiment, the monitoring range RF has a width greater than the width of the subbase BS. The feature AP is an L-shaped gutter block. The feature AP may be a mold frame for pavement, a curb block, an existing pavement body, or the like.

The monitoring range RB of the rearward monitoring device 51B desirably includes the new pavement body NP and the feature AP located outside the new pavement body NP. This is for obtaining information of the width of the new pavement body NP. In the present embodiment, the monitoring range RB has a width greater than the width of the new pavement body NP.

The moving speed sensor 51S is configured to detect the moving speed of the asphalt finisher 100. In the present embodiment, the moving speed sensor 51S is a wheel speed sensor, and is configured to detect the rotational angular speed and rotational angle of the rear wheels 5, and hence detect the moving speed and moving distance of the asphalt finisher 100.

The positioning device 51P is configured to measure the position of the asphalt finisher 100. In the present embodiment, the positioning device 51P is a GNSS compass, and is configured to measure the position and posture of the asphalt finisher 100. The GNSS compass serving as the positioning device 51P includes a left GNSS receiver 51PL and a right GNSS receiver 51PR, as illustrated in FIGS. 1 and 2. The left GNSS receiver 51PL is attached to the top end of a pole PL that extends vertically upward from the rear end of the left leveling arm 3AL. The right GNSS receiver 51PR is attached to the top end of the pole PL (not shown) that extends vertically upward from the rear end of the right leveling arm 3AR.

Alternatively, the positioning device 51P may be a total station. In this case, a reflecting prism to serve as a target of the total station is attached to the tip end of the pole PL. The body of the total station disposed around the asphalt finisher 100 is connected to the controller 50 via wireless communication. That is, the body of the total station transmits, to the controller 50, information of the position of the target that was derived.

The communication device 51T is configured to perform communication between the asphalt finisher 100 and devices outside the asphalt finisher 100. In the present embodiment, the communication device 51T is disposed in front of the driver's seat 1S, and is configured to control communication via a mobile communication network, a short-range wireless communication network, a satellite communication network, or the like.

The information obtainment device 51 may include a steering angle sensor configured to detect the steering angle of the asphalt finisher 100, a pavement width sensor configured to detect an amount of extension/contraction of the rear screed 31 and calculate the pavement width, and the like.

Also, the information obtainment device 51 may include a monitoring device disposed at the construction site, or a monitoring device attached to a flying object flying over the asphalt finisher 100. The monitoring device disposed at the construction site is, for example, a LiDAR sensor, a monocular camera, or the like attached to the tip end of a pole disposed along the construction target road. The monitoring device attached to the flying object is, for example, a LiDAR sensor, a monocular camera, or the like attached to a multicopter (drone), an airship, or the like.

The in-vehicle display device 52 is configured to display information of the asphalt finisher 100. In the present embodiment, the in-vehicle display device 52 is a liquid crystal display disposed in front of the driver's seat 1S. The in-vehicle display device 52 may be disposed, for example, at the left or right end of the screed 3 or at both the left and right ends of the screed 3.

The steering device 53 is configured to control steering of the asphalt finisher 100. In the present embodiment, the steering device 53 extends/contracts a steering cylinder disposed near a front axle. Although details will be described below, the steering device 53 includes a steering electromagnetic proportional control valve configured to control: the flow rate of hydraulic oil flowing from a hydraulic pump to the steering cylinder; and the flow rate of hydraulic oil discharged from the steering cylinder. The steering electromagnetic proportional control valve is configured to control inflow/outflow of hydraulic oil in the steering cylinder in accordance with rotation of a steering wheel SH serving as an operating device. Alternatively, the steering electromagnetic proportional control valve is configured to control inflow/outflow of hydraulic oil in the steering cylinder in accordance with a control command from the controller 50 independently of the rotation of the steering wheel SH. That is, the controller 50 can automatically control the steering of the asphalt finisher 100 independently of a driver's operation of the steering wheel SH.

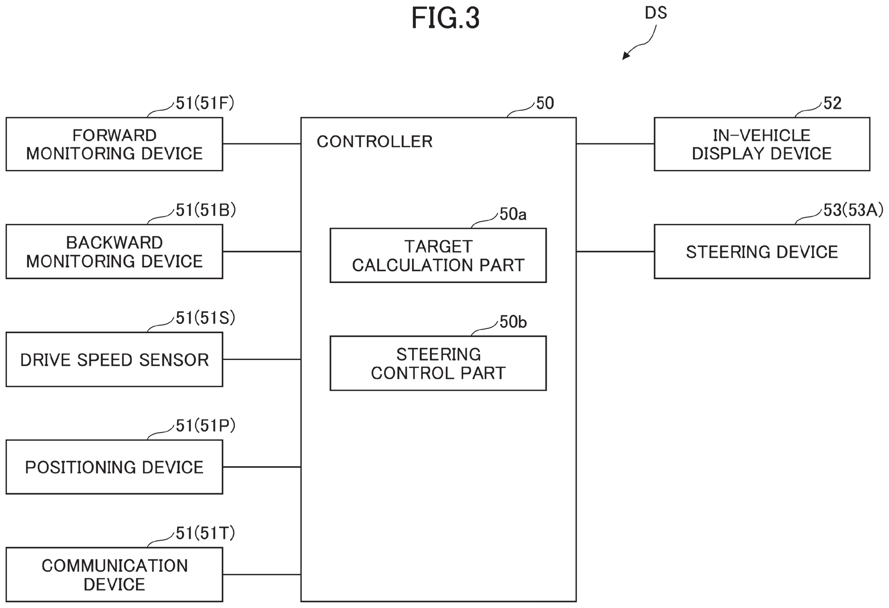

Next, a configuration example of an automatic steering system DS mounted in the asphalt finisher 100 will be described with reference to FIGS. 3 to 6. FIG. 3 is a block diagram illustrating the configuration example of the automatic steering system DS.

The automatic steering system DS mainly includes the controller 50, the forward monitoring device 51F, the rearward monitoring device 51B, the moving speed sensor 51S, the positioning device 51P, the communication device 51T, the in-vehicle display device 52, the steering device 53, and the like.

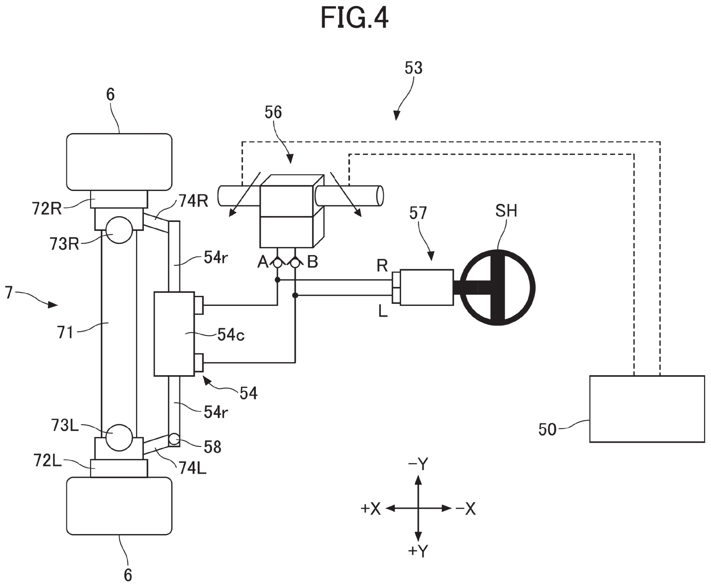

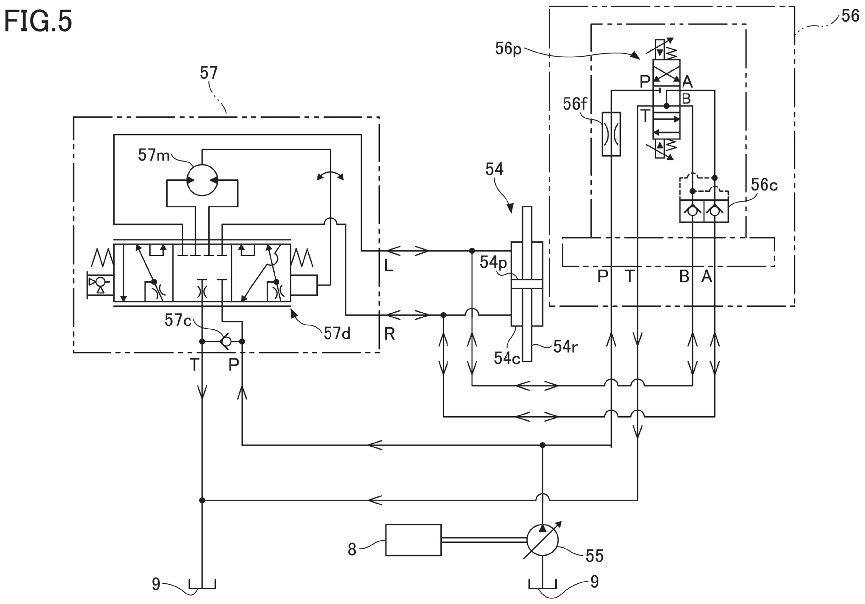

FIG. 4 is a circuit diagram schematically illustrating a configuration of the steering device 53 and a steering mechanism 7. FIG. 5 is a hydraulic circuit diagram of the steering device 53. FIG. 4 omits illustration of a hydraulic pump 55, a power source 8, a hydraulic oil tank 9, and the like, which are illustrated in FIG. 5.

As illustrated in FIG. 4, the asphalt finisher 100 includes the steering mechanism 7 configured to be operated by the steering device 53 to change the steered angle. The steered angle changed by the steering mechanism 7 is an angle of a steered wheel with respect to a direction in which the asphalt finisher 100 moves straight (front-rear axis), i.e., an actual steered angle. The steered wheel of the asphalt finisher 100 is, for example, the front wheels 6.

The steering device 53 includes, for example, a steering cylinder 54, a hydraulic pump 55, and an automatic steering device 56. Also, the steering device 53 includes, for example, the steering wheel SH and a manual steering device 57. Also, the steering device 53 may include, for example, a steered angle sensor 58 configured to detect a steered angle.

The steering cylinder 54 is, for example, a double-rod hydraulic cylinder configured to adjust the steered angle of the front wheels 6, which are the steered wheel. The steering cylinder 54 includes a cylinder tube 54c, a piston 54p, and a rod 54r. The steering cylinder 54 may be replaced with two, namely, left and right, single-rod hydraulic cylinders.

The cylinder tube 54c is a hollow cylindrical member, and includes through holes at both ends in the center-axis direction. The through holes are for insertion of the rod 54r. As illustrated in FIG. 5, the piston 54p is housed in the cylinder tube 54c to form left and right oil chambers in the cylinder tube 54c. The rod 54r is provided integrally with the piston 54p, and extends to both left and right sides of the piston 54p. The rod 54r is provided to be movable, along with the piston 54p, leftward and rightward along the center-axis direction of the cylinder tube 54c.

As illustrated in FIG. 5, for example, the hydraulic pump 55 is driven by the power source 8 mounted in the asphalt finisher 100, such as an engine, an electric motor, or the like. The hydraulic pump 55 supplies hydraulic oil to the steering cylinder 54 from a hydraulic oil tank 9 mounted in the asphalt finisher 100. The hydraulic pump 55 is, for example, a variable displacement hydraulic pump configured to control a discharge flow rate by a regulator controlling a tilt angle of a swashplate.

As illustrated in FIG. 4, for example, the steering mechanism 7 includes an axle shaft 71, left and right knuckles 72L and 72R, left and right kingpins 73L and 73R, and left and right tie rods 74L and 74R.

For example, the axle shaft 71 is attached to a vehicle body of the asphalt finisher 100 and disposed below the hopper 2. The left knuckle 72L is rotatably attached to the left end of the axle shaft 71 via the left kingpin 73L, thereby supporting the left front wheel 6. The right knuckle 72R is rotatably attached to the right end of the axle shaft 71 via the right kingpin 73R, thereby supporting the right front wheel 6.

One end of the left tie rod 74L is connected to the left knuckle 72L. The other end of the left tie rod 74L is rotatably connected to the tip end of the rod 54r extending leftward from the left end of the cylinder tube 54c of the steering cylinder 54. One end of the right tie rod 74R is connected to the right knuckle 72R. The other end of the right tie rod 74R is rotatably connected to the tip end of the rod 54r extending rightward from the right end of the cylinder tube 54c of the steering cylinder 54.

With this configuration, when the rod 54r of the steering cylinder 54 moves rightward, the left and right knuckles 72L and 72R rotate leftward (counterclockwise) about the left and right kingpins 73L and 73R. As a result, the steered angles of the left and right front wheels 6 and 6, supported by the left and right knuckles 72L and 72R, with respect to the straight direction increase leftward.

Also, when the rod 54r of the steering cylinder 54 moves leftward, the left and right knuckles 72L and 72R rotate rightward (clockwise) about the left and right kingpins 73L and 73R. As a result, the steered angles of the left and right front wheels 6 and 6, supported by the left and right knuckles 72L and 72R, with respect to the straight direction increase rightward.

The steering wheel SH is configured to perform manual operation of the steered angle of the asphalt finisher 100. For example, the steering wheel SH is connected, via a steering column (not shown), to a metering device 57m of the manual steering device 57 illustrated in FIG. 5. When the driver of the asphalt finisher 100 rotates the steering wheel SH, the metering device 57m of the manual steering device 57 rotates in accordance with the rotation direction, rotation angle, and rotation speed of the steering wheel SH.

As illustrated in FIG. 5, the manual steering device 57 is disposed between the hydraulic pump 55 and the steering cylinder 54 to be parallel with the automatic steering device 56. As the manual steering device 57, for example, ORBITROL (registered trademark) available from Eaton Corporation can be used. The manual steering device 57 controls the flow rate and direction of hydraulic oil supplied from the hydraulic pump 55 to the steering cylinder 54 in accordance with driver's operation of the steering wheel SH.

Although details will be described below, in response to the driver's operation of the steering wheel SH, the controller 50 closes a proportional control valve 56p of the automatic steering device 56, thereby prioritizing manual operation. Closing the proportional control valve 56p blocks the flow path of hydraulic oil from the hydraulic pump 55 to the steering cylinder 54 via the automatic steering device 56. Also, closing the proportional control valve 56p blocks the flow path of hydraulic oil from the steering cylinder 54 to the hydraulic oil tank 9 via the automatic steering device 56.

The manual steering device 57 includes, for example, a directional control valve 57d, a check valve 57c, and the metering device 57m. Also, the manual steering device 57 includes four ports. Specifically, the four ports are: a port P connected to the hydraulic pump 55; a port T connected to the hydraulic oil tank 9; a port L connected to the left oil chamber of the steering cylinder 54; and a port R connected to the right oil chamber of the steering cylinder 54.

The directional control valve 57d is, for example, a 6-port, 3-position directional control valve. The spool of the directional control valve 57d is located at a first position in a state in which the steering wheel SH is in the neutral position and the metering device 57m is in the neutral position. At the first position of the spool, the directional control valve 57d is in a state of closing the flow path between the port P of the manual steering device 57 and the ports L and R of the manual steering device 57, and closing the flow path between the ports L and R of the manual steering device 57 and the port T of the manual steering device 57.

Thus, when the spool of the directional control valve 57d is located at the first position, the flow path of hydraulic oil from the hydraulic pump 55 to the steering cylinder 54 via the manual steering device 57 is blocked by the directional control valve 57d. Similarly, the flow path of hydraulic oil from the steering cylinder 54 to the hydraulic oil tank 9 via the manual steering device 57 is blocked by the directional control valve 57d. Therefore, when the automatic steering device 56 does not automatically control the steered angle and the spool of the directional control valve 57d is located at the first position, the piston 54p and the rod 54r of the steering cylinder 54 do not move leftward and rightward.

When the steering wheel SH is rotated leftward and the metering device 57m is rotated leftward, the spool of the directional control valve 57d moves to a second position. At the second position of the spool, the directional control valve 57d connects the port P of the manual steering device 57 to the right flow path of the metering device 57m and connects the left flow path of the metering device 57m to the port L of the manual steering device 57. At the second position of the spool, the directional control valve 57d connects the port R and the port T of the manual steering device 57.

Therefore, when the steering wheel SH is rotated leftward, the hydraulic oil discharged from the hydraulic pump 55 flows into the left oil chamber of the steering cylinder 54 via the port P, the metering device 57m, and the port L of the manual steering device 57. Here, the flow rate of the hydraulic oil is a flow rate in accordance with a rotation angle of the metering device 57m, i.e., an amount of operation of the steering wheel SH. Also, when the pressure of the hydraulic oil increases in the left oil chamber of the steering cylinder 54 and the piston 54p moves rightward, the hydraulic oil is pushed out of the right oil chamber of the steering cylinder 54 and returns to the hydraulic oil tank 9 via the port R and the port T of the manual steering device 57.

As such, when the steering wheel SH is rotated leftward, the hydraulic oil discharged from the hydraulic pump 55 flows into the left oil chamber of the steering cylinder 54 via the manual steering device 57. Also, the hydraulic oil flowing out of the right oil chamber of the steering cylinder 54 returns to the hydraulic oil tank 9 via the manual steering device 57. As a result, the rod 54r of the steering cylinder 54 moves rightward along with the piston 54p, thereby moving rightward the ends of the left and right tie rods 74L and 74R connected to the rod 54r illustrated in FIG. 4. This causes the left and right knuckles 72L and 72R, connected to the left and right tie rods 74L and 74R, to rotate leftward (counterclockwise) about the left and right kingpins 73L and 73R. Thus, the steered angles of the left and right front wheels 6 and 6, supported by the left and right knuckles 72L and 72R, increase leftward.

Also, when the steering wheel SH is rotated rightward and the metering device 57m is rotated rightward, the spool of the directional control valve 57d moves to a third position. At the third position of the spool, the directional control valve 57d connects the port P of the manual steering device 57 to the left flow path of the metering device 57m, and connects the right flow path of the metering device 57m to the port R of the manual steering device 57. At the third position of the spool, the directional control valve 57d connects the port L and the port T of the manual steering device 57.

Thus, when the steering wheel SH is rotated rightward, the hydraulic oil discharged from the hydraulic pump 55 flows into the right oil chamber of the steering cylinder 54 via the port P, the metering device 57m, and the port R of the manual steering device 57. Here, the flow rate of the hydraulic oil is a flow rate in accordance with the rotation angle of the metering device 57m, i.e., an amount of operation of the steering wheel SH. When the pressure of the hydraulic oil increases in the right oil chamber of the steering cylinder 54 and the piston 54p moves leftward, the hydraulic oil is pushed out of the left oil chamber of the steering cylinder 54 and returns to the hydraulic oil tank 9 via the port L and the port T of the manual steering device 57.

As such, when the steering wheel SH is rotated rightward, the hydraulic oil discharged from the hydraulic pump 55 flows into the right oil chamber of the steering cylinder 54 via the manual steering device 57. Also, the hydraulic oil flowing out of the left oil chamber of the steering cylinder 54 returns to the hydraulic oil tank 9 via the manual steering device 57. As a result, the rod 54r of the steering cylinder 54 moves leftward along with the piston 54p, thereby causing the ends of the left and right tie rods 74L and 74R connected to the rod 54r illustrated in FIG. 4 to move leftward. This causes the left and right knuckles 72L and 72R, connected to the left and right tie rods 74L and 74R, to rotate rightward (clockwise) about the left and right kingpins 73L and 73R. Thus, the steered angles of the left and right front wheels 6 and 6, supported by the left and right knuckles 72L and 72R, increase rightward.

As illustrated in FIG. 5, the check valve 57c is provided in a flow path connecting the port T and the port P of the manual steering device 57. The check valve 57c blocks the flow of hydraulic oil from the port P to the port T and allows the flow of hydraulic oil from the port T to the port P. Thus, at the time of failure of the hydraulic pump 55, for example, by rotating the steering wheel SH to rotate the metering device 57m, it is possible to supply hydraulic oil to the left and right oil chambers of the steering cylinder 54 to change the steered angle.

For example, the automatic steering device 56 is disposed on the flow path of hydraulic oil between the hydraulic pump 55 and the steering cylinder 54 to be parallel with the manual steering device 57. The automatic steering device 56 controls, for example, the flow rate and direction of hydraulic oil supplied from the hydraulic pump 55 to the steering cylinder 54, in accordance with a control command from the controller 50 at the time of the asphalt finisher 100 being automatically operated by the controller 50. Thus, the steering mechanism 7 is automatically operated by the automatic steering device 56, thereby automatically controlling the steered angle.

As illustrated in FIG. 5, for example, the automatic steering device 56 includes a fixed throttle 56f, the proportional control valve 56p, and the check valve 56c. Also, the automatic steering device 56 includes a port P connected to the hydraulic pump 55 via the hydraulic oil tube and a port T connected to the hydraulic oil tank 9 via the hydraulic oil tube. Also, the automatic steering device 56 includes a port A connected to the right oil chamber of the steering cylinder 54 via the hydraulic oil tube and a port B connected to the left oil chamber of the steering cylinder 54 via the hydraulic oil tube.

The fixed throttle 56f narrows the flow path of hydraulic oil, connecting the port P of the automatic steering device 56 and a port P of the proportional control valve 56p, to be a predetermined diameter, thereby providing resistance to the hydraulic oil to control the flow rate of the hydraulic oil. This prevents sudden operation of the steering cylinder 54 to which the hydraulic oil is supplied via the automatic steering device 56.

The proportional control valve 56p is disposed between the hydraulic pump 55 and the steering cylinder 54, and controls the flow rate and direction of the hydraulic oil supplied to the steering cylinder 54. The proportional control valve 56p is, for example, a 4-port, 3-position electromagnetic proportional directional control valve. Specifically, the proportional control valve 56p includes four ports: the port P, the port T, the port A, and the port B. Each of the ports of the proportional control valve 56p is connected to a corresponding port of the automatic steering device 56. The automatic steering device 56 can drive a solenoid in accordance with a control command from the controller 50, thereby switching the position of the spool to the first position, the second position, or the third position.

For example, the proportional control valve 56p moves the spool to the first position during manual operation in which the driver operates the steering wheel SH, or at the time of maintaining the steered angle to remain unchanged during automatic operation in which the controller 50 controls the steered angle. The first position of the spool of the proportional control valve 56p is a position at which the port P of the proportional control valve 56p is not connected to the other ports of the proportional control valve 56p, and the port A and the port B of the proportional control valve 56p are connected to the port T of the proportional control valve 56p.

The hydraulic oil discharged from the hydraulic pump 55 is introduced from the port P of the automatic steering device 56, passes through the fixed throttle 56f, and flows into the port P of the proportional control valve 56p. When the spool of the proportional control valve 56p is located at the first position, the flow of the hydraulic oil flowing into the port P of the proportional control valve 56p is blocked by the spool and does not flow into the steering cylinder 54. Also, the flow of hydraulic oil from the steering cylinder 54 to the hydraulic oil tank 9 via the automatic steering device 56 is blocked by the check valve 56c.

When the steering wheel SH is not operated, the flow of hydraulic oil from the hydraulic pump 55 to the steering cylinder 54 via the manual steering device 57 is blocked by the manual steering device 57. Similarly, when the steering wheel SH is not operated, the flow of hydraulic oil from the steering cylinder 54 to the hydraulic oil tank 9 via the manual steering device 57 is blocked by the manual steering device 57. Therefore, when the spool of the proportional control valve 56p is located at the first position and the steering wheel SH is not operated, the piston 54p and the rod 54r of the steering cylinder 54 do not move, and the steered angle of the front wheel 6, which is a steered wheel, is maintained.

Also, the proportional control valve 56p moves the spool to the second position in accordance with a control command from the controller 50 to increase the steered angle leftward. The second position of the spool of the proportional control valve 56p is a position at which the port P and the port B of the proportional control valve 56p are connected and the port A and the port T of the proportional control valve 56p are connected. Also, when the spool is located at the second position, the proportional control valve 56p proportionally controls the opening degree of the flow path connecting the ports in accordance with a control command from the controller 50.

The hydraulic oil discharged from the hydraulic pump 55 is introduced from the port P of the automatic steering device 56, passes through the fixed throttle 56f, and flows into the port P of the proportional control valve 56p. When the spool of the proportional control valve 56p is located at the second position, the hydraulic oil flowing into the port P of the proportional control valve 56p is adjusted to a flow rate corresponding to the opening degree of the proportional control valve 56p and discharged from the port B of the proportional control valve 56p. Subsequently, the hydraulic oil passes through the check valve 56c, is discharged from the port B of the automatic steering device 56, and flows into the left oil chamber of the steering cylinder 54.

As a result, the pressure of the hydraulic oil increases in the left oil chamber of the steering cylinder 54, and the piston 54p moves rightward, thereby pushing the hydraulic oil out of the right oil chamber of the steering cylinder 54. The hydraulic oil pushed out of the right oil chamber of the steering cylinder 54 returns to the hydraulic oil tank 9 via the port A of the automatic steering device 56, the check valve 56c, the ports A and T of the proportional control valve 56p, and the port T of the automatic steering device 56. The check valve 56c allows the hydraulic oil to flow from the port A of the automatic steering device 56 to the port A of the proportional control valve 56p when the hydraulic oil flows from the port B of the proportional control valve 56p to the port B of the automatic steering device 56.

Therefore, in accordance with a control command to increase the steered angle leftward being input from the controller 50 to the proportional control valve 56p, the hydraulic oil flows into the left oil chamber of the steering cylinder 54 from the hydraulic pump 55 via the automatic steering device 56. At the same time, the hydraulic oil flows out of the right oil chamber of the steering cylinder 54 to the hydraulic oil tank 9 via the automatic steering device 56. As a result, the rod 54r of the steering cylinder 54 moves rightward along with the piston 54p, and the ends of the left and right tie rods 74L and 74R connected to the rod 54r illustrated in FIG. 4 move rightward. This causes the left and right knuckles 72L and 72R, connected to the left and right tie rods 74L and 74R, to rotate leftward (counterclockwise) about the left and right kingpins 73L and 73R. Thus, the steered angles of the left and right front wheels 6 and 6, supported by the left and right knuckles 72L and 72R, increase leftward.

Also, the proportional control valve 56p moves the spool to the third position in accordance with a control command from the controller 50 to increase the steered angle rightward. The third position of the spool of the proportional control valve 56p is a position at which the port P and the port A of the proportional control valve 56p are connected and the port B and the port T of the proportional control valve 56p are connected. When the spool is located at the third position, the proportional control valve 56p proportionally controls the opening degree of the flow path connecting the ports in accordance with a control command from the controller 50.

The hydraulic oil discharged from the hydraulic pump 55 is introduced from the port P of the automatic steering device 56, passes through the fixed throttle 56f, and flows into the port P of the proportional control valve 56p. When the spool of the proportional control valve 56p is located at the third position, the hydraulic oil flowing into the port P of the proportional control valve 56p is adjusted to a flow rate corresponding to the opening degree of the proportional control valve 56p and discharged from the port A of the proportional control valve 56p. Subsequently, the hydraulic oil passes through the check valve 56c, is discharged from the port A of the automatic steering device 56, and flows into the right oil chamber of the steering cylinder 54.

As a result, the pressure of the hydraulic oil increases in the right oil chamber of the steering cylinder 54, and the piston 54p moves rightward, thereby pushing the hydraulic oil out of the left oil chamber of the steering cylinder 54. The hydraulic oil pushed out of the left oil chamber of the steering cylinder 54 returns to the hydraulic oil tank 9 via the port B of the automatic steering device 56, the check valve 56c, the ports B and T of the proportional control valve 56p, and the port T of the automatic steering device 56. The check valve 56c allows the hydraulic oil to flow from the port B of the automatic steering device 56 to the port B of the proportional control valve 56p when the hydraulic oil flows from the port A of the proportional control valve 56p to the port A of the automatic steering device 56.

Therefore, in accordance with a control command to increase the steered angle rightward being input from the controller 50 to the proportional control valve 56p, the hydraulic oil flows into the right oil chamber of the steering cylinder 54 from the hydraulic pump 55 via the automatic steering device 56. At the same time, the hydraulic oil flows out of the left oil chamber of the steering cylinder 54 to the hydraulic oil tank 9 via the automatic steering device 56. As a result, the rod 54r of the steering cylinder 54 moves leftward along with the piston 54p, and the ends of the left and right tie rods 74L and 74R connected to the rod 54r illustrated in FIG. 4 move leftward. This causes the left and right knuckles 72L and 72R, connected to the left and right tie rods 74L and 74R, to rotate rightward (clockwise) about the left and right kingpins 73L and 73R. Thus, the steered angles of the left and right front wheels 6 and 6, supported by the left and right knuckles 72L and 72R, increase rightward.

As illustrated in FIG. 4, the steered angle sensor 58 detects the steered angle of the front wheels 6, which are the steered wheel. In the example illustrated in FIG. 4, the steered angle sensor 58 is an angle sensor configured to detect the angle of the left tie rod 74L with respect to the rod 54r, thereby detecting the steered angle of the front wheel 6. The steered angle sensor 58 may detect the steered angle of the front wheel 6 by detecting the rotation angles of the left and right knuckles 72L and 72R about the left and right kingpins 73L and 73R.

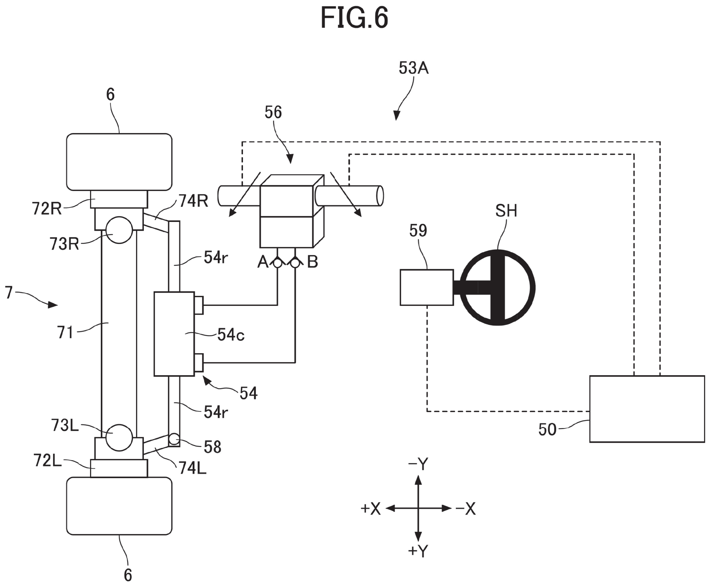

FIG. 6 is a circuit diagram corresponding to FIG. 4, and illustrates a modified example of the steering device 53 as described above. A steering device 53A according to the modified example illustrated in FIG. 6 is different from the steering device 53 illustrated in FIG. 4 in that the steering device 53A includes a steering angle sensor 59 instead of the manual steering device 57. Since other configurations of the steering device 53A are the same as those of the steering device 53 illustrated in FIG. 4, the same components are denoted by the same reference signs, and description thereof is omitted.

For example, the steering angle sensor 59 is provided on a steering column of the steering wheel SH and configured to detect a steering angle of the steering wheel SH. The steering angle is a rotation angle of the steering wheel SH when the steering wheel SH is operated. The steering angle sensor 59 detects, as the steering angle, a rotation direction of the steering wheel SH and an amount of operation of the steering wheel SH. The steering angle sensor 59 may detect an angular velocity, an angular acceleration, a torque, or the like, when the steering wheel SH is operated. The steering angle sensor 59 outputs, to the controller 50, a signal in accordance with the detected steering angle.

Next, the controller 50 configured to control the steering device 53 or 53A as described above will be described. In the example illustrated in FIG. 3, the controller 50 includes, as functional blocks, a target calculation part 50a, a steering control part 50b, and a display control part 50c.

The target calculation part 50a is configured to calculate a target used by the steering control part 50b. The target used by the steering control part 50b is, for example, a target trajectory that is a trajectory to be drawn by a predetermined point on the asphalt finisher 100. The predetermined point is a point previously associated with a predetermined portion of the asphalt finisher 100 and is also referred to as a steering reference point or a control reference point. However, the predetermined point may be a point dynamically associated with a predetermined portion of the asphalt finisher 100. Strictly speaking, the target trajectory is a one-dimensional array of many target positions. The target position is a point to be reached by the predetermined point on the asphalt finisher 100. Alternatively, the target used by the steering control part 50b may be a target position that is a point to be reached by the predetermined point on the asphalt finisher 100 after passage of a predetermined period. The predetermined period is, for example, several milliseconds, several tens of milliseconds, several hundreds of milliseconds, or several seconds.

In the present embodiment, the target calculation part 50a calculates a target trajectory to be followed by a predetermined point at the center portion of the tractor 1 based on information of the construction target road, such as construction design data or the like. In this case, typically, the target trajectory is calculated before the asphalt finisher 100 starts to move. Therefore, the target trajectory may be calculated by a server or the like installed in a management center located outside the asphalt finisher 100 and then transmitted to the controller 50 through communication. The predetermined point may be a point set at the center portion of the front end of the hopper 2 rather than the point set at the center portion of the tractor 1. Also, in the case of the wheel-type asphalt finisher, the predetermined point may be a point set at a position of the left front wheel, a point set at a position of the right front wheel, or a point set at the center portion of a front wheel axis.

The target calculation part 50a may calculate a target position as a point to be reached by the predetermined point at the center portion of the tractor 1 after passage of a predetermined period. In this case, the target position is repeatedly calculated at a predetermined control cycle while the asphalt finisher 100 is moving. For example, the target calculation part 50a may calculate, as the target position, a center point in the width direction of the construction target road that is located a predetermined distance in front of the current position of a predetermined point at the center portion of the tractor 1, based on the information obtained by the forward monitoring device 51F. The predetermined distance is, for example, several centimeters or several tens of centimeters. In this case, the target calculation part 50a can calculate the target position without obtaining the construction design data. However, the target calculation part 50a may calculate the target position based on the construction design data and the information obtained by the forward monitoring device 51F. For example, the target calculation part 50a may correct, based on the information obtained by the forward monitoring device 51F, the target position calculated based on the construction design data. Also, the target calculation part 50a may use the information obtained by the rearward monitoring device 51B.

The steering control part 50b is configured to automatically control the steering of the asphalt finisher 100 independently of operation of the operating device.

In the present embodiment, the steering control part 50b outputs a control command to the steering device 53 such that the predetermined point at the center portion of the tractor 1 follows the target trajectory calculated by the target calculation part 50a. Specifically, the steering control part 50b derives the current position of the predetermined point at the center portion of the tractor 1 based on the output of the positioning device 51P. When it is determined that the predetermined point deviates rightward from the target trajectory, the steering control part 50b outputs a control command to the steering device 53 such that the asphalt finisher 100 moves leftward. Similarly, when it is determined that the predetermined point deviates leftward from the target trajectory, the steering control part 50b outputs a control command to the steering device 53 such that the asphalt finisher 100 moves rightward.

Alternatively, the steering control part 50b may output a control command to the steering device 53 to position the predetermined point at the center portion of the tractor 1 to be at the target position calculated by the target calculation part 50a. In this case, the steering control part 50b may derive the current position of the predetermined point at the center portion of the tractor 1 based on the output of the positioning device 51P. Alternatively, the current position of the predetermined point at the center portion of the tractor 1 may be derived based on the output of at least one of the rearward monitoring device 51B or the forward monitoring device 51F. In the latter case, the positioning device 51P may be omitted.

The control command output by the steering control part 50b to the steering device 53 or 53A includes a control command to control a steered angle for the proportional control valve 56p of the automatic steering device 56. The control command to control the steered angle includes, for example, a control command to increase or decrease the steered angle leftward or rightward in units of 0.1 degrees, 1 degree, or several degrees. The control command to control the steered angle includes, for example, a control command to control the position and opening degree of the spool i.e., the direction and flow rate of hydraulic oil, with respect to the proportional control valve 56p of the automatic steering device 56.

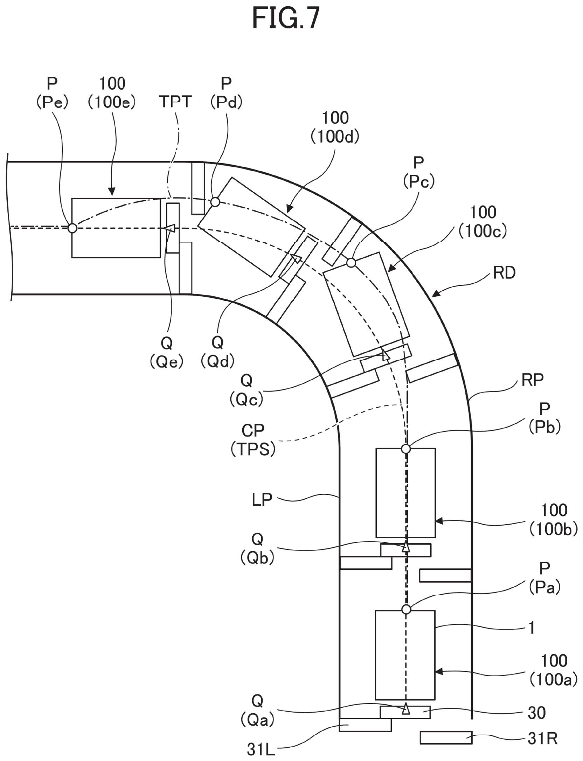

Next, a function of causing the asphalt finisher 100 to move along the target trajectory will be described with reference to FIG. 7. FIG. 7 is a top diagram of a construction site, and illustrates the asphalt finisher 100 passing through a curved portion (left curve) of a construction target road RD. In FIG. 7, an asphalt finisher 100a corresponds to the asphalt finisher 100 at a first point in time, which is the time of start of construction. An asphalt finisher 100b corresponds to the asphalt finisher 100 at a second point in time after passage of a predetermined period from the first point in time. Similarly, an asphalt finisher 100c corresponds to the asphalt finisher 100 at a third point in time after passage of a predetermined period from the second point in time. An asphalt finisher 100d corresponds to the asphalt finisher 100 at a fourth point in time after passage of a predetermined period from the third point in time. An asphalt finisher 100e corresponds to the asphalt finisher 100 at a fifth point in time after passage of a predetermined period from the fourth point in time. For ease of understanding, FIG. 7 illustrates the tractor 1, the front screed 30, the left rear screed 31L, and the right rear screed 31R of the asphalt finisher 100 in a simplified manner, and omits illustration of the hopper 2.

The target calculation part 50a of the controller 50 calculates a target trajectory TPT to be followed by a predetermined point P at the center portion of the tractor 1 at the first point in time, which is the time of start of construction. In the example illustrated in FIG. 7, the predetermined point P is represented by a "circular mark", and the target trajectory TPT is represented by a chain line. The target calculation part 50a refers to the construction design data to derive a center line CP of the road RD based on a left boundary line LP and a right boundary line RP of the construction target road RD. Then, the target calculation part 50a sets the center line CP as a target trajectory TPS to be followed by a predetermined point Q at the center portion of the front screed 30. In the example illustrated in FIG. 7, the predetermined point Q is represented by a "triangular mark" and the target trajectory TPS is represented by a broken line. Then, the target calculation part 50a calculates the target trajectory TPT to be followed by the predetermined point P based on the target trajectory TPS and known information including, for example, the distance between the rear wheel 5 and the front wheel 6 of the asphalt finisher 100.

In the example illustrated in FIG. 7, the left boundary line LP, the right boundary line RP, the center line CP of the road RD, the target trajectory TPT to be followed by the predetermined point P, and the target trajectory TPS to be followed by the predetermined point Q are all derived as one-dimensional arrays of many position coordinates. The position coordinates are, for example, coordinates in a reference coordinate system.

The reference coordinate system is, for example, the world geodetic system. The world geodetic system is a three-dimensional orthogonal coordinate system in which the origin is set at the centroid of the globe. Specifically, the world geodetic system is an XYZ orthogonal coordinate system in which an X axis is an axis passing through the origin and the intersection between the Greenwich meridian and the equator, a Y axis is an axis passing through the origin and the intersection between the meridian at a 90-degree east longitude and the equator, and a Z axis is an axis passing through the origin and the North Pole.

Subsequently, the steering control part 50b of the controller 50 causes the asphalt finisher 100 to move such that the actual position coordinates of the predetermined point P coincide with one of the position coordinates forming the target trajectory TPT. Specifically, the steering control part 50b derives the current position of the predetermined point P at the center portion of the tractor 1 based on the output of the positioning device 51P.

When the position of the predetermined point P is located rightward from the target trajectory TPT, the steering control part 50b outputs a control command to increase the steered angle leftward to the proportional control valve 56p of the automatic steering device 56, which forms the steering device 53. Then, the proportional control valve 56p moves the spool to the second position and adjusts the flow path of hydraulic oil to an opening degree that is proportional to the control command, thereby causing a predetermined amount of hydraulic oil to flow from the hydraulic pump 55 into the left oil chamber of the steering cylinder 54. As a result, the steered angles of the left and right front wheels 6 and 6 are increased leftward by the steering mechanism 7. Thus, the asphalt finisher 100 moves leftward while advancing, and the position of the predetermined point P comes close to the target trajectory TPT.

Conversely, when the position of the predetermined point P is located leftward from the target trajectory TPT, the steering control part 50b outputs a control command to increase the steered angle rightward to the proportional control valve 56p of the automatic steering device 56, which forms the steering device 53. Then, the proportional control valve 56p moves the spool to the third position and adjusts the flow path of hydraulic oil to an opening degree that is proportional to the control command, thereby causing a predetermined amount of hydraulic oil to flow from the hydraulic pump 55 into the right oil chamber of the steering cylinder 54. As a result, the steered angles of the left and right front wheels 6 and 6 are increased rightward by the steering mechanism 7. Thus, the asphalt finisher 100 moves rightward while advancing, and the position of the predetermined point P comes close to the target trajectory TPT.

In this manner, the controller 50 controls the proportional control valve 56p to control the steered angle. Thus, the controller 50 can position the predetermined point P located at a point Pa at the first point in time to be a point Pb at the second point in time and a point Pc at the third point in time. Similarly, the controller 50 can position the predetermined point P to be a point Pd at the fourth point in time and a point Pe at the fifth point in time. As a result, the controller 50 can position the predetermined point Q located at a point Qa at the first point in time to be a point Qb at the second point in time and a point Qc at the third point in time. Similarly, the controller 50 can position the predetermined point Q to be a point Qd at the fourth point in time and a point Qe at the fifth point in time.

As illustrated in FIG. 4, when the asphalt finisher 100 includes the steered angle sensor 58 configured to detect the steered angle, the controller 50 may control the steered angle based on the detection result of the steered angle sensor 58 and the target value of the steered angle.

As illustrated in FIG. 6, when the asphalt finisher 100 includes the steering angle sensor 59 configured to detect the steering angle of the steering wheel SH, the controller 50 may control the proportional control valve 56p based on the detection result of the steering angle sensor 59. Specifically, the controller 50 can obtain the direction and amount of operation of the steering wheel SH based on the detection result of the steering angle sensor 59, and output a control command in accordance with the direction and amount of the operation to the proportional control valve 56p of the automatic steering device 56.

In the example illustrated in FIG. 7, the left rear screed 31L is extended leftward such that the left end surface coincides with the left boundary line LP of the road RD, and the right rear screed 31R is extended rightward such that the right end surface coincides with the right boundary line RP of the road RD. The left end surface of the left rear screed 31L moves to follow the left boundary line LP, and the right end surface of the right rear screed 31R moves to follow the right boundary line RP. Therefore, the controller 50 can cause the tractor 1 to advance such that the predetermined point P at the center portion of the tractor 1 follows the target trajectory TPT, thereby causing the width of the road RD to coincide with the width of the new pavement body NP.

The controller 50 may extend/contract the rear screed 31 while the asphalt finisher 100 is moving. For example, the controller 50 may extend the left rear screed 31L leftward when there is a possibility that the left end surface of the left rear screed 31L deviates from the left boundary line LP to be inside the road RD. Alternatively, the controller 50 may extend the right rear screed 31R rightward when there is a possibility that the right end surface of the right rear screed 31R deviates from the right boundary line RP to be inside the road RD.

Also, in the example illustrated in FIG. 7, the steering control part 50b controls the steering of the asphalt finisher 100 while the asphalt finisher 100 is moving on the curved portion of the road RD. However, the steering control part 50b may control the steering of the asphalt finisher 100 while the asphalt finisher 100 is moving on the straight portion of the road RD.

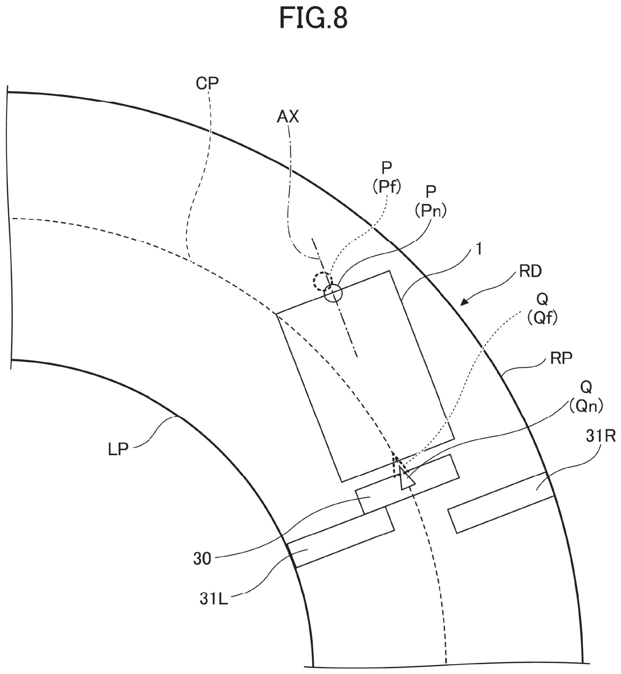

Next, a function of moving the asphalt finisher 100 while determining the target position in real time will be described with reference to FIG. 8. FIG. 8 is a top diagram of a construction site, and illustrates the asphalt finisher 100 passing through the curved portion of the construction target road RD. For ease of understanding, similar to FIG. 7, FIG. 8 illustrates the tractor 1, the front screed 30, the left rear screed 31L, and the right rear screed 31R of the asphalt finisher 100 in a simplified manner, and omits illustration of the hopper 2.

In the example illustrated in FIG. 8, the target calculation part 50a of the controller 50 derives the center line CP of the construction target road RD based on the information obtained by the forward monitoring device 51F. In the example illustrated in FIG. 8, the center line CP is represented by a dotted line. Specifically, the target calculation part 50a derives the left boundary line LP and the right boundary line RP of the road RD based on the information obtained by the forward monitoring device 51F, and then derives the center line CP of the road RD based on the left boundary line LP and the right boundary line RP. The information obtained by the forward monitoring device 51F is, for example, the position and direction of a step between the curb block and the subbase BS. Also, the target calculation part 50a derives a current position Pn of the predetermined point P at the center portion of the tractor 1 and a current position Qn of the predetermined point Q at the center portion of the front screed 30. Specifically, the target calculation part 50a derives the current position Pn of the predetermined point P and the current position Qn of the predetermined point Q based on the output of the positioning device 51P. In the example illustrated in FIG. 8, the predetermined point P is represented by a "circular mark", and the predetermined point Q is represented by a "triangular mark".

Subsequently, the target calculation part 50a calculates the target position Pf as a point to be reached by the predetermined point P after passage of a predetermined period. Specifically, the target calculation part 50a calculates the target position Qf as a point to be reached by the predetermined point Q after passage of the predetermined period, based on the construction design data and the current position Pn of the predetermined point P. Also, the target calculation part 50a calculates the target position Pf based on the target position Qf and known information including, for example, the distance between the rear wheel 5 and the front wheel 6 of the asphalt finisher 100. Both the target position Pf and the target position Qf are derived as position coordinates. The position coordinates are, for example, coordinates in the reference coordinate system. In the example illustrated in FIG. 8, the target position Pf is represented by a "circular mark" of a dotted line, and the target position Qf is represented by a "triangular mark" of a dotted line.

Subsequently, the steering control part 50b of the controller 50 causes the asphalt finisher 100 to move such that the position coordinates of the predetermined point P coincide with the position coordinates of the target position Pf. For example, the steering control part 50b derives a center axis AX of the asphalt finisher 100 based on the output of the positioning device 51P.

When the target position Pf is located leftward from the center axis AX, the steering control part 50b outputs a control command to increase the steered angle leftward to the proportional control valve 56p of the automatic steering device 56, which forms the steering device 53. Then, the proportional control valve 56p moves the spool to the second position and adjusts the flow path of hydraulic oil to an opening degree that is proportional to the control command, thereby causing a predetermined amount of hydraulic oil to flow from the hydraulic pump 55 into the left oil chamber of the steering cylinder 54. As a result, the steered angles of the left and right front wheels 6 and 6 are increased leftward by the steering mechanism 7. Thus, the asphalt finisher 100 moves leftward while advancing, and the position of the predetermined point P comes close to the target position Pf.

Conversely, when the target position Pf is located rightward from the center axis AX, the steering control part 50b outputs a control command to increase the steered angle rightward to the proportional control valve 56p of the automatic steering device 56, which forms the steering device 53. Then, the proportional control valve 56p moves the spool to the third position and adjusts the flow path of hydraulic oil to an opening degree that is proportional to the control command, thereby causing a predetermined amount of hydraulic oil to flow from the hydraulic pump 55 into the right oil chamber of the steering cylinder 54. As a result, the steered angles of the left and right front wheels 6 and 6 are increased rightward by the steering mechanism 7. Thus, the asphalt finisher 100 moves rightward while advancing, and the position of the predetermined point P comes close to the target position Pf.

In this manner, the controller 50 controls the proportional control valve 56p to control the steered angle. Thus, the controller 50 can position the predetermined point P to be at the target position Pf. As a result, the controller 50 can position the predetermined point Q to be at the target position Qf.

The steering control part 50b may cause the asphalt finisher 100 to move such that the position coordinates of the predetermined point Q coincide with the position coordinates of the target position Qf. Alternatively, the steering control part 50b may cause the asphalt finisher 100 to move such that the predetermined point Q comes close to the center line CP of the road RD. In this case, every predetermined control cycle, the steering control part 50b determines whether the predetermined point Q is located on the center line CP of the road RD, rightward from the center line CP, or leftward from the center line CP. Then, the steering control part 50b causes the asphalt finisher 100 to move leftward in response to determining that the predetermined point Q is located rightward from the center line CP, and the steering control part 50b causes the asphalt finisher 100 to move rightward in response to determining that the predetermined point Q is located leftward from the center line CP.

In the example illustrated in FIG. 8, the left rear screed 31L is extended leftward such that the left end surface coincides with the left boundary line LP of the road RD, and the right rear screed 31R is extended rightward such that the right end surface coincides with the right boundary line RP of the road RD. Then, the left end surface of the left rear screed 31L moves to follow the left boundary line LP, and the right end surface of the right rear screed 31R moves to follow the right boundary line RP. Therefore, the controller 50 can cause the tractor 1 to advance such that the predetermined point P at the center portion of the tractor 1 follows the target position Pf calculated every predetermined control cycle, thereby causing the width of the road RD to coincide with the width of the new pavement body NP.

The controller 50 may extend/contract the rear screed 31 while the asphalt finisher 100 is moving. For example, the controller 50 may extend the left rear screed 31L leftward when there is a possibility that the left end surface of the left rear screed 31L deviates from the left boundary line LP to be inside the road RD. Alternatively, the controller 50 may extend the right rear screed 31R rightward when there is a possibility that the right end surface of the right rear screed 31R deviates from the right boundary line RP to be inside the road RD.

Also, in the example illustrated in FIG. 8, the steering control part 50b controls the steering of the asphalt finisher 100 while the asphalt finisher 100 is moving on the curved portion of the road RD. However, the steering control part 50b may control the steering of the asphalt finisher 100 while the asphalt finisher 100 is moving on the straight portion of the road RD.

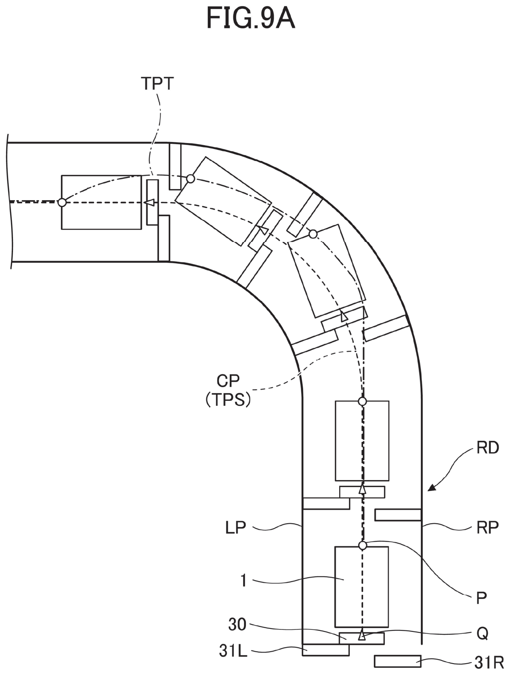

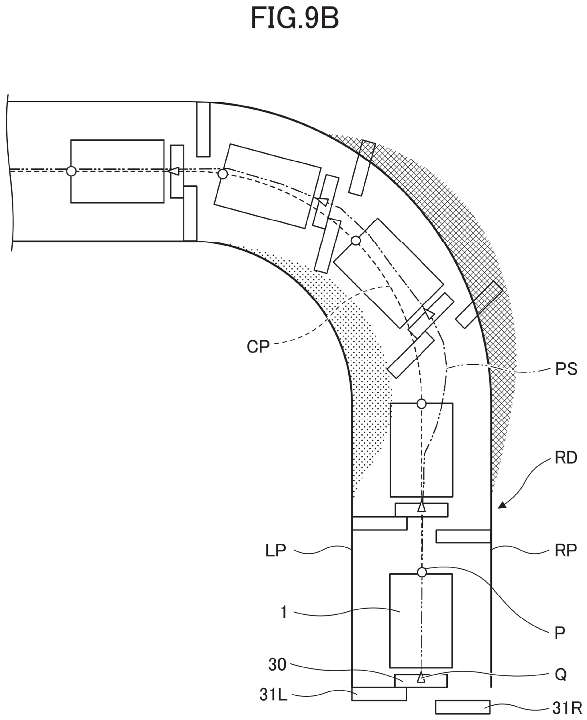

Next, effects obtained by the steering device 53 automatically controlling the movement of the asphalt finisher 100 will be described with reference to FIGS. 9A and 9B. FIGS. 9A and 9B are top diagrams of a construction site, and illustrate the asphalt finisher 100 passing through the curved portion of the construction target road RD. Specifically, FIG. 9A illustrates the movement of the asphalt finisher 100 when automatic steering is performed by the steering device 53. FIG. 9B illustrates the movement of the asphalt finisher 100 when manual steering is performed such that the predetermined point P at the center portion of the tractor 1 follows the center line CP of the road RD. In the examples illustrated in FIGS. 9A and 9B, the predetermined point P at the center portion of the tractor 1 is represented by a "circular mark", and the predetermined point Q at the center portion of the front screed 30 is represented by a "triangular mark".

As illustrated in FIG. 9B, when manual steering is performed such that the predetermined point P follows the center line CP of the road RD, the predetermined point Q at the center portion of the front screed 30 follows a trajectory PS of a two-dot chain line. That is, when the asphalt finisher 100 passes through the curved portion of the road RD, the distance between the front end of the right side surface of the tractor 1 and the right boundary line RP of the road RD is substantially equal to the distance between the front end of the left side surface of the tractor 1 and the left boundary line LP of the road RD. However, the distance between the front end of the right side surface of the front screed 30 and the right boundary line RP of the road RD is smaller than the distance between the front end of the left side surface of the front screed 30 and the left boundary line LP of the road RD. Therefore, the paving material is not laid on an inner region of the curved portion of the road RD indicated by a dot pattern, while the paving material is laid on an outer region of the curved portion of the road RD, indicated by a cross pattern, to project beyond the right boundary line RP of the road RD.

In this manner, when the asphalt finisher 100 passes through the curved portion of the road RD, the driver of the asphalt finisher 100 moves the asphalt finisher 100 such that the tractor 1 is located at the center portion of the road RD in the width direction. However, even if the asphalt finisher 100 is caused to move in this manner, the screed 3 cannot be positioned at the center portion of the road RD in the width direction.

As illustrated in FIGS. 7 and 9A, it is assumed that the movement of the asphalt finisher 100 is automatically controlled by the steering device 53 such that the predetermined point P follows the target trajectory TPT. Then, the predetermined point Q at the center portion of the front screed 30 follows the center line CP of the road RD indicated by a broken line. That is, when the asphalt finisher 100 passes through the curved portion of the road RD, the distance between the front end of the right side surface of the tractor 1 and the right boundary line RP of the road RD is smaller than the distance between the front end of the left side surface of the tractor 1 and the left boundary line LP of the road RD. However, the distance between the front end of the right side surface of the front screed 30 and the right boundary line RP of the road RD is substantially equal to the distance between the front end of the left side surface of the front screed 30 and the left boundary line LP of the road RD. Therefore, the paving material is reliably laid on the inner region of the curved portion of the road RD, and the paving material is not laid to project beyond the right boundary line RP of the road RD. That is, in the curved portion of the road RD, the asphalt finisher 100 can cause the width of the construction target road RD to coincide with the width of the new pavement body NP.

In this manner, when the asphalt finisher 100 passes through the curved portion of the road RD, the controller 50 causes the asphalt finisher 100 to move such that the tractor 1 comes close to the end of the road RD in the width direction. Therefore, the screed 3 can be positioned at the center portion of the road RD in the width direction.

As described above, the asphalt finisher 100 according to the embodiment of the present disclosure includes the tractor 1, the hopper 2, the conveyors CV, the screws SC, the screeds 3, the information obtainment devices 51, and the controller 50. The hopper 2 is disposed on the front side of the tractor 1 and configured to receive the paving material. The conveyors CV convey the paving material in the hopper 2 to the rear side of the tractor 1. The screws SC lay and spread the paving material conveyed by the conveyors CV on the rear side of the tractor 1. The screeds 3 level the paving material, laid and spread by the screws SC, on the rear side of the screws SC. The information obtainment devices 51 obtain information of the construction target road. The controller 50 is the control device configured to control the movement of the tractor 1 based on the target trajectory TPT or the target position Pf or Qf determined based on the information of the construction target road obtained by the information obtainment devices 51.

With this configuration, the asphalt finisher 100 can appropriately construct a pavement body along the construction target road RD.

As described above, the conventional work machine described in Japanese Unexamined Patent Publication No. 2009-113611 uses the direction switching valve configured to control the steering cylinder in accordance with a signal from the controller, thereby steering the steered wheel. In the automatic control of the asphalt finisher 100 according to the present embodiment, for example, the steered angle can be increased or decreased leftward or rightward in units of 0.1 degrees, 1 degree, or several degrees, which is smaller than in the manual operation of the steering wheel SH.

The direction switching valve of the conventional work machine switches the flow path of hydraulic oil between a fully opened state and a fully closed state, thereby adjusting the flow rate of the hydraulic oil. Therefore, when the direction switching valve of the conventional work machine is used for automatic control, the resolution of the steered angle required by the automatic control according to the present embodiment cannot be realized. Therefore, the conventional work machine has a problem with improving the accuracy of steered angle control. Also, the conventional work machine may frequently open and close the direction switching valve due to repetition of control of the steered angle in small increments/decrements as described above, thereby increasing a load on the direction switching valve.

The asphalt finisher 100 according to the present embodiment includes the plurality of wheels W including the front wheels 6 and 6 serving as the steered wheels, the steering cylinder 54 configured to adjust the steered angles of the steered wheels, and the hydraulic pump 55 configured to supply the hydraulic oil to the steering cylinder 54. Also, the asphalt finisher 100 includes the proportional control valve 56p and the controller 50. The proportional control valve 56p is disposed between the hydraulic pump 55 and the steering cylinder 54 and configured to control the flow rate and direction of the hydraulic oil supplied to the steering cylinder 54. The controller 50 controls the proportional control valve 56p to control the steered angle.

With this configuration, it is possible to improve accuracy of the steered angle control of the asphalt finisher 100. Specifically, in the automatic control of the asphalt finisher 100, the proportional control valve 56p can proportionally control the flow rate of the hydraulic oil supplied to the steering cylinder 54 in accordance with a control command to control the steered angle from the controller 50. Therefore, the proportional control valve 56p can control the flow rate of the hydraulic oil supplied to the steering cylinder 54 in small increments/decrements, and the steering cylinder 54 can control the steered angle in small increments/decrements. This enables continuous steering, as well as fine and smooth steering. Therefore, according to the asphalt finisher 100 of the present embodiment, it is possible to improve accuracy of the steered angle control, and the accuracy of following the target route in the automatic control. Also, in the fine steered angle control, it is possible to avoid repeated opening and closing of the proportional control valve 56p, and suppress the load on the proportional control valve 56p.

Also, the asphalt finisher 100 according to the present embodiment includes the steering wheel SH configured to perform the manual operation of the steered angle, and the manual steering device 57 disposed between the hydraulic pump 55 and the steering cylinder 54 to be parallel with the proportional control valve 56p. The manual steering device 57 controls the flow rate and direction of the hydraulic oil supplied from the hydraulic pump 55 to the steering cylinder 54 in response to the operation of the steering wheel SH. In response to the operation of the steering wheel SH, the controller 50 closes the proportional control valve 56p to prioritize the manual operation.

With this configuration, it is possible to achieve not only the automatic control of the steered angle using the proportional control valve 56p but also the manual operation in which the driver operates the steering wheel SH to change the steered angle. Also, the proportional control valve 56p and the manual steering device 57 are connected in parallel between the hydraulic pump 55 and the steering cylinder 54. This can reduce the pressure loss of the hydraulic oil supplied from the hydraulic pump 55 to the steering cylinder 54 compared to these being connected in series. In addition, the influence of one of the proportional control valve 56p or the manual steering device 57 on the other is suppressed, and redundancy of the steering device 53 is improved. Further, as illustrated in the steering device 53A of FIG. 6, the manual steering device 57 of the steering device 53 can be replaced with the steering angle sensor 59.

Specifically, as illustrated in FIG. 6, the asphalt finisher 100 can further include the steering wheel SH configured to perform manual operation of the steered angle and the steering angle sensor 59 configured to detect the steering angle of the steering wheel SH. In this case, the controller 50 controls the proportional control valve 56p based on the detection result of the steering angle sensor 59, as described above.

With this configuration, it is possible to improve accuracy of the steered angle control of the asphalt finisher 100 in the automatic control of the steered angle while simplifying the device configuration by omitting the manual steering device 57.

The asphalt finisher 100 according to the present embodiment further includes the steered angle sensor 58 configured to detect the steered angle, and the controller 50 controls the steered angle based on the detection result of the steered angle sensor 58 and the target value of the steered angle.

With this configuration, it is possible to perform feedback control of the steered angle and further improve accuracy of the steered angle control of the asphalt finisher 100.

As illustrated in FIG. 7 or 8, the construction target road RD is curved leftward. In this case, the controller 50 may be configured to set the target trajectory TPT or the target position Pf to the outside (right side) of the center (center line CP) of the construction target road RD in the curved portion of the construction target road RD. For example, the target trajectory TPT is a target trajectory to be followed by the predetermined point P at the center portion of the tractor 1, and the target position Pf is a point to be reached by the predetermined point P after passage of a predetermined period.

The controller 50 may be configured to set the target trajectory TPT or the target position Pf such that the center portion in the width direction of the construction target road RD coincides with the center in the width direction of the screed 3. For example, as illustrated in FIG. 7, the target calculation part 50a of the controller 50 may be configured to set the target trajectory TPT or the target position Pf such that a trajectory drawn by the predetermined point Q at the center portion of the front screed 30 coincides with the center line CP of the road RD.

With this configuration, the controller 50 can cause the width of the road RD to coincide with the width of the new pavement body NP even if the asphalt finisher 100 passes through not only the straight portion of the road RD but also the curved portion of the road RD.

The controller 50 may be configured to set the target trajectory TPT or the target position Pf such that at least one of the ends of the screed 3 coincides with the feature. For example, as illustrated in FIG. 7, the target calculation part 50a of the controller 50 may set the target trajectory TPT or the target position Pf such that the left end of the screed 3 coincides with the left boundary line LP of the road RD and such that the right end of the screed 3 coincides with the right boundary line RP of the road RD. Alternatively, the target calculation part 50a of the controller 50 may set the target trajectory TPT or the target position Pf such that the left end of the screed 3 coincides with the left boundary line LP of the road RD. Alternatively, the target calculation part 50a of the controller 50 may set the target trajectory TPT or the target position Pf such that the right end of the screed 3 coincides with the right boundary line RP of the road RD.

Also, the controller 50 may be configured to set the target trajectory TPT or the target position Pf based on the distance in a front-rear direction between the predetermined point P, serving as a steering reference point, and the screed 3. For example, the controller 50 may be configured to set the target trajectory TPT or the target position Pf based on the distance in the front-rear direction between the predetermined point P and the predetermined point Q at the center portion of the front screed 30.

Also, the controller 50 may be configured to set the target trajectory TPS or the target position Qf based on the distance in the front-rear direction between the predetermined point P, serving as the steering reference point, and the screed 3. For example, the controller 50 may be configured to set the target trajectory TPS or the target position Qf based on the distance in the front-rear direction between the predetermined point P and the predetermined point Q at the center portion of the front screed 30. The target trajectory TPS is, for example, a target trajectory to be followed by the predetermined point Q at the center portion of the front screed 30, and the target position Qf is a point to be reached by the predetermined point Q after passage of a predetermined period.

The controller 50 may be configured to control the movement of the tractor 1 such that the asphalt finisher 100 moves along the target trajectory TPT that is previously set. Specifically, the controller 50 may be configured to control the movement of the tractor 1 such that the asphalt finisher 100 moves along the target trajectory TPT that is set before the asphalt finisher 100 starts to move. However, the controller 50 may be configured to control the movement of the tractor 1 such that the asphalt finisher 100 moves along the target trajectory TPT that is calculated in real time.

With this configuration, the controller 50 enables appropriate control of the movement of the tractor 1 in a simple and reliable manner.

The information obtainment device 51 may be a photographing device or the communication device 51T. The photographing device may be a LIDAR sensor, a monocular camera, a stereo camera, a depth camera, or the like.

The embodiments of the present disclosure have been described above. However, the present disclosure is not limited to the above-described embodiments. Various modifications, substitutions, and the like are applicable to the above-described embodiments without departing from the scope of the present disclosure. Also, the features described with reference to the above-described embodiments may be combined appropriately unless there is a technical contradiction.

### REFERENCE SIGNS LIST

- 5: Rear wheel (wheel)
- 6: Front wheel (steered wheel/wheel)
- 50: Controller
- 54: Steering cylinder
- 55: Hydraulic pump
- 56p: Proportional control valve
- 57: Manual steering device
- 58: Steered angle sensor
- 59: Steering angle sensor
- 100: Asphalt finisher
- SH: Steering wheel
- W: Wheel

## Claims

1. An asphalt finisher, comprising:
a plurality of wheels including a steered wheel;
a steering cylinder configured to adjust a steered angle of the steered wheel;
a hydraulic pump configured to supply hydraulic oil to the steering cylinder;
a proportional control valve disposed between the hydraulic pump and the steering cylinder, and configured to control a flow rate and a direction of the hydraulic oil supplied to the steering cylinder; and
a controller configured to control the proportional control valve to control the steered angle.

2. The asphalt finisher according to claim 1, further comprising:
a steering wheel configured to perform manual operation of the steered angle; and
a manual steering device disposed between the hydraulic pump and the steering cylinder to be parallel with the proportional control valve, wherein
the manual steering device is configured to control the flow rate and the direction of the hydraulic oil supplied from the hydraulic pump to the steering cylinder in accordance with operation of the steering wheel, and
in response to the operation of the steering wheel, the controller closes the proportional control valve to prioritize the manual operation.

3. The asphalt finisher according to claim 1, further comprising:
a steering wheel configured to perform manual operation of the steered angle; and
a steering angle sensor configured to detect a steering angle of the steering wheel, wherein
the controller controls the proportional control valve based on a detection result of the steering angle sensor.

4. The asphalt finisher according to claim 1, further comprising:
a steered angle sensor configured to detect the steered angle, wherein
the controller controls the steered angle based on a detection result of the steered angle sensor and a target value of the steered angle.
